# EUROPÄISCHE PATENTSCHRIFT

(11) **EP 2 790 985 B1**
(45) Veröffentlichungstag und Bekanntmachung des Hinweises auf die Patenterteilung: **03.02.2016**
(21) Anmeldenummer: 12775004.0
(22) Anmeldetag: 15.10.2012
(51) Int. Cl.: B60T 13/66

(54) **WECKVORRICHTUNG FÜR EINE BREMSSYSTEMKOMPONENTE EINES FAHRZEUGS UND VERFAHREN ZUM WECKEN MINDESTENS EINER BREMSSYSTEMKOMPONENTE EINES FAHRZEUGS**
EXCITATION DEVICE FOR A BRAKE SYSTEM COMPONENT OF A VEHICLE AND METHOD FOR EXCITING AT LEAST ONE BRAKE SYSTEM COMPONENT OF A VEHICLE
DISPOSITIF D'ACTIVATION POUR UN COMPOSANT D'UN SYSTÈME DE FREINAGE DE VÉHICULE ET PROCÉDÉ D'ACTIVATION D'AU MOINS UN COMPOSANT DE SYSTÈME DE FREINAGE D'UN VÉHICULE

(30) Priorität: 13.12.2011 DE 102011088350
(43) Veröffentlichungstag der Anmeldung: 22.10.2014
(73) Patentinhaber: Robert Bosch GmbH, 70442 Stuttgart (DE)
(72) Erfinder: MAYER, Jochen, 89537 Giengen an der Brenz (DE); RIETHMUELLER, Joerg, 74080 Heilbronn (DE)
(86) Internationale Anmeldenummer: PCT/EP2012/070360
(87) Internationale Veröffentlichungsnummer: WO 2013/087252

(56) Entgegenhaltungen:
- EP-A2- 2 037 221
- WO-A1-2005/113306
- DE-A1- 10 123 730
- DE-A1-102008 064 049

## Beschreibung

Die Erfindung betrifft eine Weckvorrichtung für eine Bremssystemkomponente eines Fahrzeugs. Des Weiteren betrifft die Erfindung ein Verfahren zum Wecken mindestens einer Bremssystemkomponente eines Fahrzeugs.

### Stand der Technik

In der DE 101 23 730 A1 sind ein System, ein Positionsgeber und eine Empfangseinrichtung zur sicheren Übertragung der Position eines Betätigungselements beschrieben. Das System weist eine Weckeinrichtung auf, welche dazu ausgelegt ist, in einem Sensorkanal ein zum Wecken zulässiges Signal zu erkennen und anschließend weitere Komponenten von einem schlafenden Modus in einen vollaktivierten Betriebsmodus zu steuern. Das zum Wecken zulässige Signal wird über mindestens einen linear an einem Pedal mitverstellbar angeordneten Magneten in den Sensorkanal induziert.

### Offenbarung der Erfindung

Die Erfindung schafft eine Weckvorrichtung für eine Bremssystemkomponente eines Fahrzeugs mit den Merkmalen des Anspruchs 1, eine Bremskraftverstärkervorrichtung für ein Bremssystem eines Fahrzeugs mit den Merkmalen des Anspruchs 9, ein Bremsgerät für ein Bremssystem eines Fahrzeugs mit den Merkmalen des Anspruchs 10 und ein Verfahren zum Wecken mindestens einer Bremssystemkomponente eines Fahrzeugs mit den Merkmalen des Anspruchs 12.

### Vorteile der Erfindung

Die vorliegende Erfindung ermöglicht es, zum Induzieren einer zum Wecken mindestens einer Bremssystemkomponente verwendbaren Induktionsspannung, bzw. eines korrespondierenden Induktionsstroms, einen Magneten zu verwenden, welcher mittels einer Getriebeeinrichtung derart an der verstellbaren Fahrerbremskraftübertragungskomponente mitverstellbar anordbar/angeordnet ist, dass der Magnet durch das Mitverstellen mit der Fahrerbremskraftübertragungskomponente in eine Rotationsbewegung versetzbar ist. Somit können zum Induzieren der Induktionsspannung auch Magneten herangezogen werden, welche in der Regel bereits mittels einer Getriebeeinrichtung mit einer Fahrerbremskraftübertragungskomponente mitverstellbar angeordnet sind. Die vorliegende Erfindung realisiert somit die Ausbildung einer Weckvorrichtung, welche als Magneten einen bereits herkömmlicher Weise für eine andere Funktion genutzten Magneten verwenden kann. Durch die auf diese Weise realisierbare Multifunktionalität des Magneten kann auf einen ausschließlich für die Weckvorrichtung verwendeten Magneten verzichtet werden. Dies bewirkt eine Einsparung von Bauraum und eine Reduzierung von Kosten für ein Ausstatten eines Fahrzeugs mit einem eine Weckfunktion ausführenden Bremssystem.

Die vorliegende Erfindung ermöglicht auch das Ausbilden einer Weckfunktion an einem Bremssystem ohne einen Bremslichtschalter. Häufig wird der Bremslichtschalter bei einem Bremssystem mit einem elektromechanischen Bremskraftverstärker eingespart Somit kann der eingesparte Bremslichtschalter in diesem Fall nicht zum Aktivieren des vorliegenden Bremssystems verwendet werden. Mittels der vorliegenden Erfindung kann jedoch auch in diesem Fall die Induktionsspannung oder das Wecksignal an die mindestens eine Bremssystemkomponente zum Wecken bereitgestellt werden. Auch der elektromechanische Bremskraftverstärker kann so geweckt werden. Dies ist auch gewährleistet, sofern alle internen Sensoren in einem deaktivierten Modus/passiv vorliegen und nicht zum Erzeugen eines Aktivierungssignals/Wecksignals ausgelegt sind.

Die vorliegende Erfindung ermöglicht ein Einschalten/Wecken mindestens einer Bremssystemkomponente, wie beispielsweise eines Bremskraftverstärkers, durch ein bei einem Betätigen einer Bremsbetätigungskomponente, wie einem Bremspedal, generiertes Induktionssignal/Wecksignal. Somit ist die zuvor in einem passiven Zustand vorliegende mindestens eine Bremssystemkomponente durch eine Betätigung der Bremssystemkomponente auf einfache Weise und verlässlich in einen aktiven Zustand überführbar. Insbesondere ist durch die hier aufgeführte Erfindung ein Einschalten/Wecken der mindestens einen Bremssystemkomponente durch ein internes, induktiv generiertes Signal möglich, ohne dass dazu einer der internen Sensoren aktiv vorliegen muss und somit Strom verbraucht.

Die Bremssystemkomponente weist in dem ersten Energieverbrauch-Modus einen ersten Energieverbrauch auf, welcher von einem zweiten Energieverbrauch der Bremssystemkomponente in dem zweiten Energieverbrauch-Modus abweicht. Beispielsweise kann in dem ersten Energieverbrauch-Modus eine andere Anzahl von Untereinheiten der Bremssystemkomponente aktiviert sein als in dem zweiten Energieverbrauch-Modus. Unter dem ersten Energieverbrauch oder dem zweiten Energieverbrauch kann die zeitlich gemittelte verbrauchte Energie der in den ersten Energieverbrauch-Modus oder in den zweiten Energieverbrauch-Modus gesteuerten Bremssystemkomponente verstanden werden.

Vorteilhaftverweise ist die mindestens eine Bremssystemkomponente mittels der Induktionsspannung oder des Wecksignals aus dem ersten Energieverbrauch-Modus mit einem ersten Energieverbrauch in den zweiten Energieverbrauch-Modus mit einem gegenüber dem ersten Energieverbrauch gesteigerten zweiten Energieverbrauch steuerbar. Insbesondere kann die mindestens eine Bremssystemkomponente mittels der Induktionsspannung oder des Wecksignals aus einem deaktivierten/schlafenden Modus als dem ersten Energieverbrauch-Modus in einen aktivierten/vollaktiven Modus als den zweiten Energieverbrauch-Modus steuerbar sein.

In einer vorteilhaften Ausführungsform kann der Magnet ein Permanentmagnet eines Elektromotors einer Bremskraftverstärkervorrichtung und/oder ein Permanentmagnet eines Rotor-Lagesensors sein. Man kann dies auch so umschreiben, dass durch das Betätigen des Bremsbetätigungselements der Elektromotor oder der Rotor-Lagesensor als Generator nutzbar ist, um einen dabei erzeugten Spannungsimpuls als Aktivierungsimpuls zum Einschalten der mindestens einen Bremssystemkomponente zu verwenden.

Beispielsweise kann der Magnet mittels der Getriebeeinrichtung an einer Eingangsstange, über welche eine auf das Bremsbetätigungselement ausgeübte Fahrerbremskraft auf mindestens einen verstellbaren Kolben eines Hauptbremszylinders übertragbar ist, als der mitverstellbaren Fahrerbremskraftübertragungskomponente mitverstellbar anordbar sein. Somit kann für den Magneten ein herkömmlicher Weise häufig bereits über eine Getriebeeinrichtung mit der Eingangsstange verbundener Magnet genutzt werden. Dies bewirkt ein Einsparen eines nach dem Stand der Technik lediglich als Weckgerät genutzten Magneten.

In einer weiteren vorteilhaften Ausführungsform können mittels der Induktionsspannung oder des Wecksignals die Bremskraftverstärkervorrichtung, eine ABS-Vorrichtung, eine ESP-Vorrichtung, eine Plungervorrichtung, eine elektrische Servolenkung, ein CAN-Netzwerk und/oder ein Boost-Netzwerk als die mindestens eine Bremssystemkomponente aus dem ersten Energieverbrauch-Modus in den zweiten Energieverbrauch-Modus steuerbar sein. Somit kann die erfindungsgemäße Weckvorrichtung für eine Vielzahl von Bremssystemkomponenten genutzt werden.

In einer kostengünstigen Ausführungsform umfasst der elektrische Leiter mindestens eine Ansteuerleitung der Bremskraftverstärkervorrichtung. Ebenso kann der elektrische Leiter mindestens eine ortsfeste Spule des Rotor-Lagesensors umfassen. Für den elektrischen Leiter können somit herkömmlicher Weise bereits in einem Bremssystem vorhandene Komponenten genutzt werden.

Die in den vorausgehenden Absätzen beschriebenen Vorteile sind auch bei einer Bremskraftverstärkervorrichtung mit einer entsprechenden Weckvorrichtung gewährleistet.

Außerdem sind die genannten Vorteile bei einem Bremsgerät mit einer derartigen Weckvorrichtung und einer verstellbaren Fahrerbremskraftübertragungskomponente, an welcher der Magnet der Weckvorrichtung mittels der Getriebeeinrichtung derart mitverstellbar angeordnet ist, dass der Magnet durch das Mitverstellen mit der verstellbaren Fahrerbremskraftübertragungskomponente in eine Rotationsbewegung versetzbar ist, realisiert.

Zusätzlich können die Vorteile mittels eines Bremssystems mit einer derartigen Weckvorrichtung, einer korrespondierenden Bremskraftverstärkervorrichtung oder einem entsprechend ausgebildeten Bremsgerät realisiert werden.

Des Weiteren bewirkt auch ein korrespondierendes Verfahren zum Wecken mindestens einer Bremssystemkomponente eines Fahrzeugs die oben beschriebenen Vorteile.

### Kurze Beschreibung der Zeichnungen

Weitere Merkmale und Vorteile der vorliegenden Erfindung werden nachfolgend anhand der Figuren erläutert. Es zeigen:
- Fig. 1: eine schematische Darstellung einer ersten Ausführungsform der Weckvorrichtung;
- Fig. 2: eine schematische Darstellung einer zweiten Ausführungsform der Weckvorrichtung;
- Fig. 3: eine schematische Darstellung einer dritten Ausführungsform der Weckvorrichtung; und
- Fig. 4: ein Flussdiagramm zum Darstellen einer Ausführungsform des Verfahrens zum Wecken mindestens einer Bremssystemkomponente eines Fahrzeugs.

### Ausführungsformen der Erfindung

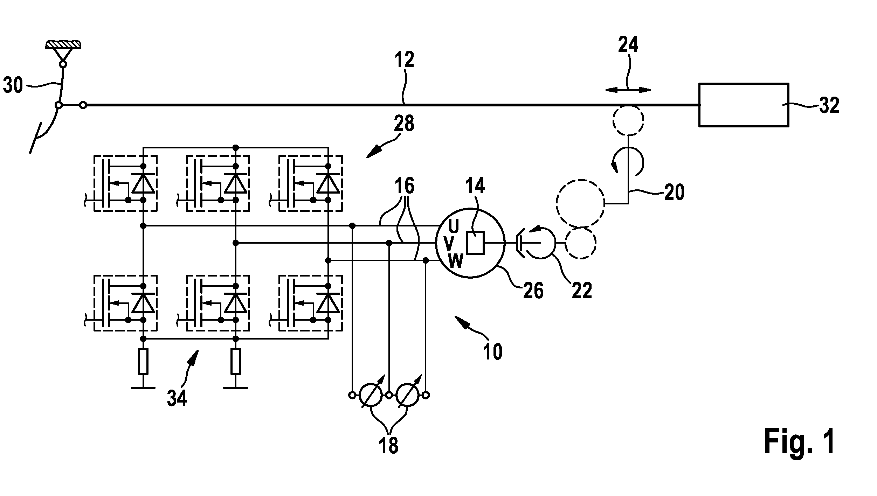

Fig. 1 zeigt eine schematische Darstellung einer ersten Ausführungsform der Weckvorrichtung.

Die in Fig. 1 schematisch dargestellte Weckvorrichtung 10 umfasst einen an einer verstellbaren Fahrerbremskraftübertragungskomponente 12 eines Bremssystems des Fahrzeugs mitverstellbar anordbaren/angeordneten Magneten 14. Zusätzlich weist die Weckvorrichtung 10 mindestens einen elektrischen Leiter 16 auf, in welchem bei einer durch das Mitverstellen des an der Fahrerbremskraftübertragungskomponente 12 angeordneten Magneten 14 bewirkten Relativbewegung zwischen dem Magneten 14 und den mindestens einen elektrischen Leiter 16 eine Induktionsspannung induzierbar ist. Man kann dies auch so umschreiben, dass durch das Mitverstellen des Magneten 14 zusammen mit der Fahrerbremskraftübertragungskomponente 12 dieser gegenüber dem mindestens einen (ortsfesten) elektrischen Leiter 16 verstellt und dadurch die Induktionsspannung induziert wird.

Die Weckvorrichtung 10 hat auch eine Ausgabeeinrichtung 18, mittels welcher die induzierte Induktionsspannung oder ein unter Berücksichtigung der Induktionsspannung erzeugtes Wecksignal an mindestens eine Bremssystemkomponente des Bremssystems ausgebbar ist. Dies ist so ausführbar, dass die mindestens eine Bremssystemkomponente mittels der Induktionsspannung oder des Wecksignals aus einem ersten Energieverbrauch-Modus in einen von dem ersten Energieverbrauch-Modus abweichenden zweiten Energieverbrauch-Modus steuerbar ist.

Vorteilhaftverweise ist die mindestens eine Bremssystemkomponente mittels der Induktionsspannung oder des Wecksignals aus dem ersten Energieverbrauch-Modus mit einem ersten Energieverbrauch in den zweiten Energieverbrauch-Modus mit einem gegenüber dem ersten Energieverbrauch gesteigerten zweiten Energieverbrauch steuerbar. Insbesondere kann die mindestens eine Bremssystemkomponente mittels der Induktionsspannung oder des Wecksignals aus einem deaktivierten/schlafenden Modus als dem ersten Energieverbrauch-Modus in einen aktivierten/vollaktiven Modus als den zweiten Energieverbrauch-Modus steuerbar sein.

Der Magnet 14 ist mittels einer Getriebeeinrichtung 20 derart an der verstellbaren Fahrerbremskraftübertragungskomponente 12 mitverstellbar anordbar, dass der Magnet durch das Mitverstellen in eine Rotationsbewegung 22 versetzbar ist. Insbesondere kann die Getriebeeinrichtung 20 so ausgelegt sein, dass mittels der Getriebeeinrichtung 20 eine Linearbewegung 24 der Fahrerbremskraftübertragungskomponente 12 in die Rotationsbewegung 22 des Magneten 14 übersetzbar ist. Die Getriebeeinrichtung 20 kann beispielsweise ein Getriebe sein. Es wird jedoch darauf hingewiesen, dass die Ausführbarkeit der Getriebeeinrichtung 20 nicht auf einen bestimmten Typ eines Getriebes oder einer getriebeähnlichen Einrichtung limitiert ist.

Für die Weckvorrichtung 10 ist somit ein Magnet 14 verwendbar, welcher über ein Linearbewegung-Rotationsbewegung-Übersetzungselement als Getriebeeinrichtung 20 mit der Fahrerbremskraftübertragungskomponente 12 verbunden ist. Herkömmlicherweise ist häufig mindestens ein Magnet 14 auf diese Weise mit der Fahrerbremskraftübertragungskomponente 12 verbunden. Somit kann ein bereits in einem Bremssystem vorhandener/genutzter Magnet 14 zum Realisieren der Weckvorrichtung 10 genutzt werden. Der für die Weckvorrichtung 10 genutzte Magnet 14 kann zusätzlich noch seine herkömmlicher Weise ausgeführte Funktion erfüllen. Durch die realisierte Multifunktionalität des Magneten 14 bei der Weckvorrichtung 10 ist eine kostengünstige und/oder bauraumsparende Ausstattung eines Bremssystems mit der Weckvorrichtung bewirkbar.

Beispielsweise kann der Magnet 14 ein Permanentmagnet eines Elektromotors 26 einer Bremskraftverstärkervorrichtung 28 sein. Herkömmlicherweise ist oft ein Permanentmagnet eines Elektromotors 26, wie beispielsweise eines PSM-Motors, über eine Getriebeeinrichtung 20 so mit einer Fahrerbremskraftübertragungskomponente 12 verbunden, dass eine zusätzliche Bremsunterstützungskraft mittels des Elektromotors 26 auf die Fahrerbremskraftübertragungskomponente 12 ausübbar ist. Gleichzeitig ist in der Regel gewährleistet, dass der Magnet 14 des Elektromotors 26 bei einem Verstellen der Fahrerbremskraftübertragungskomponente 12 zumindest mittels der Fahrerbremskraft automatisch in die Rotationsbewegung 22 mitversetzt wird. Die hier beschriebene Ausführungsform ist somit auf einfache Weise an einem Bremssystem ausbildbar.

Die Fahrerbremskraftübertragungskomponente 12 kann beispielsweise eine Eingangsstange sein. In diesem Fall ist der Magnet 14 mittels der Getriebeeinrichtung 20 so an der Eingangsstange anordbar/angeordnet, dass der Magnet 14 durch die Linearbewegung 24 der als Eingangsstange ausgebildeten Fahrerbremskraftübertragungskomponente 12 in die Rotationsbewegung 22 versetzt wird. Unter der Eingangsstange kann dabei eine Fahrerbremskraftübertragungskomponente 12 verstanden werden, über welche eine auf ein Bremsbetätigungselement 30 ausgeübte Fahrerbremskraft auf mindestens einen verstellbaren Kolben eines Hauptbremszylinders 32 des Bremssystems übertragbar ist. Das Bremsbetätigungselement 30 kann beispielsweise ein Bremspedal sein. Es wird jedoch darauf hingewiesen, dass die Ausbildbarkeit der Weckvorrichtung nicht auf einen an einer Eingangsstange anordbaren Magneten 14 beschränkt ist.

Der mindestens eine elektrische Leiter 16 kann mindestens eine Ansteuerleitung der Bremskraftverstärkervorrichtung 28 umfassen. Somit kann eine bereits häufig in einer Steuerelektronik 34 der Bremskraftverstärkervorrichtung 28 vorhandene Komponente für den mindestens einen elektrischen Leiter 16 genutzt werden. Eine andere Ausbildung des mindestens einen elektrischen Leiters 16 ist jedoch ebenso möglich.

Die in Fig. 1 schematisch wiedergegebene Ausführungsform realisiert somit einen elektromechanischen Bremskraftverstärker, in welchem die Weckvorrichtung 10 integriert ist. Eine Betätigung des Bremsbetätigungselements 30 durch den Fahrer bewirkt ein Antreiben des damit in einem Eingriff stehenden Antriebs umfassend die als Fahrerbremskraftübertragungskomponente 12 ausgebildete Eingangsstange. Der über die Getriebeeinrichtung 20 mit dem Antrieb verbundene Magnet 14 wird in die Rotationsbewegung 22 versetzt und induziert als Generator in dem mindestens einen auch als Ansteuerleitung nutzbaren elektrischen Leiter 16 die Induktionsspannung. Die Ausgabeeinrichtung 18 kann die Induktionsspannung beispielsweise an den Motorklemmen als Spannungsimpuls detektieren und mittels dieses Spannungsimpuls als Wecksignal mindestens eine Bremssystemkomponente aus dem ersten Energieverbrauch-Modus in den zweiten Energieverbrauch-Modus steuern. Man kann dies insbesondere als ein Wecken der mindestens einen Bremssystemkomponente umschreiben.

Mittels der Induktionsspannung oder des Wecksignals können beispielsweise die Bremskraftverstärkervorrichtung 28, eine ABS-Vorrichtung, eine ESP-Vorrichtung, eine Plungervorrichtung, eine elektrische Servolenkung, ein CAN-Netzwerk und/oder ein Boost-Netzwerk als die mindestens eine Bremssystemkomponente aus dem deaktivierten Modus in den aktivierten Modus steuerbar sein. Zusätzlich zu den hier aufgezählten Bremssystemkomponenten kann auch eine weitere Bremssystemkomponente mittels des von der Ausgabeeinrichtung 18 ausgegebenen Signals steuerbar/weckbar sein.

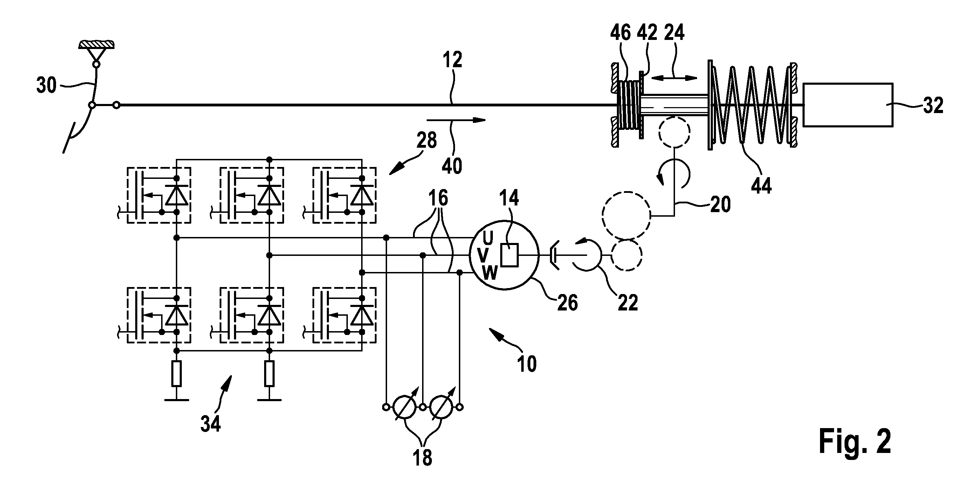

Fig. 2 zeigt eine schematische Darstellung einer zweiten Ausführungsform der Weckvorrichtung.

In der Ausführungsform der Fig. 2 ist der als Permanentmagnet des Elektromotors 26 der Bremskraftverstärkervorrichtung 28 ausgebildete Magnet 14 der Weckvorrichtung 10 so an einer als Eingangsstange ausgebildeten verstellbaren Fahrerbremskraftübertragungskomponente 12 angeordnet, dass der Magnet 14 der Weckvorrichtung 10 mittels der Getriebeeinrichtung 20 mit der Fahrerbremskraftübertragungskomponente 12 mitverstellbar ist. Dabei ist gewährleistet, dass der Magnet 14 durch das Mitverstellen mit der verstellbaren Fahrerbremskraftübertragungskomponente 12 in die Rotationsbewegung 22 versetzbar ist. Auf diese Weise ist ein Bremssystem aus zumindest der Weckvorrichtung 10 und der verstellbaren Fahrerbremskraftübertragungskomponente 12 realisierbar, bei welchem die oben schon genannten Vorteile gewährleistet sind.

Es wird darauf hingewiesen, dass die oben schon beschriebenen Vorteile auch bei der Ausbildungsform der Fig. 2 bewirkbar sind, obwohl der Antrieb mit der als Eingangsstange ausgebildeten Fahrerbremskraftübertragungskomponente 12 nur in eine Einbremsrichtung 40 als Betätigungsrichtung unterstützend wirken kann. Somit ist die vorteilhafte Technologie auch anwendbar auf ein Bremssystem, dessen Eingangsstange zwischen dem Bremsbetätigungselement 30 und dem Hauptbremszylinder 32 koaxial oder nicht-koaxial durch eine mitverstellbare Hülse 42 geführt ist. Ein Verschieben der Eingangsstange in die Einbremsrichtung 40, d.h. von dem Bremsbetätigungselement 30 zu dem Hauptbremszylinder 32, bewirkt eine Verstellbewegung der mitverstellbaren Hülse 42 auf den Hauptbremszylinder 32 zu, wodurch eine an einer zu dem Hauptbremszylinder 32 gerichteten Seite der Hülse angeordnete Rückstellfeder 44 komprimiert wird. (Mittels der Rückstellfeder 44 kann das Bremsbetätigungselement 32 nach einer Betätigung durch einen Fahrer wieder in eine Ausgangsstellung zurückversetzt werden.)

Ein elastischer Anschlag 46 ist an einer von der Rückstellfeder 44 weggerichteten Seite der Hülse 42 ausgebildet. Eine Betätigung des Bremsbetätigungselements 30 durch den Fahrer, bei welcher die Rückstellfeder 44 komprimiert wird, betätigt den Hauptbremszylinder 32 und entspannt den elastischen Anschlag 46. Dabei wird die mit dem Antrieb in Eingriff stehende Hülse 42 in die Einbremsrichtung 40 bewegt. Diese Bewegung der Hülse 42 in die Einbremsrichtung 40 bewirkt die Rotationsbewegung 22 des Magneten 14, wodurch die Induktionsspannung in dem mindestens einen Leiter 16 induziert wird, welche als generatorischer Spannungsimpuls an den Motorklemmen ermittelbar/nachweisbar ist. Anschließend kann der Spannungsimpuls als Wecksignal zum Aktivieren mindestens einer Bremssystemkomponente verwendet werden. Somit ist selbst bei einer inaktivierten Bremskraftverstärkervorrichtung 28 durch den generatorischen Betrieb des Magneten 14, welcher im Eingriff mit dem Antrieb steht, das Wecksignal verlässlich erzeugbar.

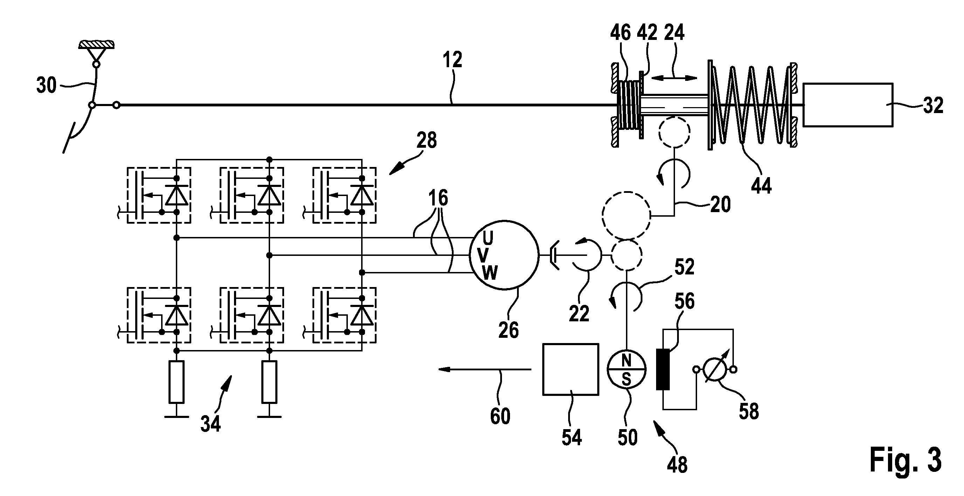

Fig. 3 zeigt eine schematische Darstellung einer dritten Ausführungsform der Weckvorrichtung.

Bei der in Fig. 3 schematisch dargestellten Weckvorrichtung 48 wird ein Magnet 50 eines Sensors zur Erzeugung/Induzierung der Induktionsspannung/des Wecksignals genutzt. Der Magnet 50 kann ein Permanentmagnet/Dauermagnet sein. Insbesondere kann der Magnet 50 ein Permanentmagnet eines Rotor-Lagesensors 54 sein. Der Rotor-Lagesensor 54 ist vorzugsweise ein berührungsloser Sensor mit einem als Magnet 50 genutzten Dauermagneten. Die Verwendbarkeit eines Magneten 50 für die Weckvorrichtung 48 ist jedoch nicht auf die hier genannten Beispiele limitiert.

Der Magnet 50 ist mittels der Getriebeeinrichtung 20 so an der verstellbaren Fahrerbremskraftübertragungskomponente 12 mitverstellbar anordbar/angeordnet, dass der Magnet 50 durch das Mitverstellen mit der linear bewegten Fahrerbremskraftübertragungskomponente 12 in die Rotationsbewegung 52 versetzbar ist. Der elektrische Leiter 56, in welchem mittels des in die Rotationsbewegung 52 versetzten Magneten 50 die Induktionsspannung induzierbar ist, umfasst mindestens eine ortsfeste Spule 56 des Rotor-Lagesensors 54. Die Ausgabeeinrichtung 58 ist eine mit der mindestens einen Spule 56 elektrisch verbundene Elektronik. Selbst wenn für den elektrischen Leiter 56 eine zusätzlich Spule an dem Rotor-Lagesensor 54 anzuordnen ist, so ist dies vergleichsweise billig ausführbar.

Die vorteilhafte Weckvorrichtung 48 ist somit auch in einen Rotor-Lagesensor 54 integrierbar. Auch in diesem Fall sind die oben schon genannten Vorteile verlässlich realisierbar.

Der Rotor-Lagesensor 54 kann eine Untereinheit der Bremskraftverstärkervorrichtung 28 sein. Insbesondere eine Bremskraftverstärkervorrichtung 28 mit einem (elektrisch kommutierten) Motor 26 umfasst häufig einen Rotor-Lagesensor 54, welcher einer Elektronik die Lage eines Rotors des Motors 26 für eine Kommutierung meldet. Somit kann zur Integration der Weckvorrichtung 48 eine oft bereits an der Bremskraftverstärkervorrichtung 28 vorhandene Sensorik genutzt werden. In diesem Fall kann der Rotor-Lagesensor 54 sowohl als Weckvorrichtung 48 als auch als Sensor zum Ermitteln und Ausgeben einer Information 60 bezüglich einer Stellung des Rotors des Motors 26 genutzt werden. Durch diese Multifunktionalität des Rotor-Lagesensors 54 können Herstellungskosten eingespart und ein Bauraumbedarf der Weckvorrichtung 48 limitiert werden.

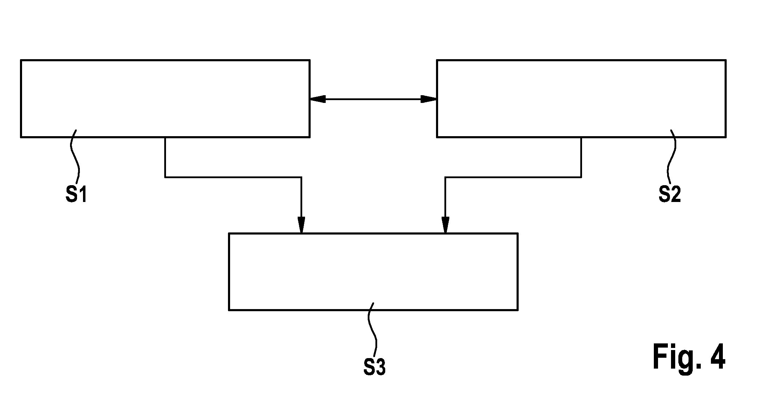

Fig. 4 zeigt ein Flussdiagramm zum Darstellen einer Ausführungsform des Verfahrens zum Wecken mindestens einer Bremssystemkomponente eines Fahrzeugs.

In einem Verfahrensschritt S1 wird ein an einer verstellbaren Fahrerbremskraftübertragungskomponente eines Bremssystems des Fahrzeugs mitverstellbar angeordneter Magnet bereitgestellt. Das Bereitstellen des Magneten erfolgt so, dass der benutzte Magnet mittels einer Getriebeeinrichtung derart an der (vorzugsweise linear) verstellbaren Fahrerbremskraftübertragungskomponente mitverstellbar angeordnet ist, dass der Magnet durch das Mitverstellen in eine Rotationsbewegung versetzt wird.

In einem gleichzeitig, zuvor oder nachfolgend ausführbaren Verfahrensschritt S2 wird mindestens ein elektrischer Leiter bereitgestellt. Das Bereitstellen des elektrischen Leiters erfolgt so, dass bei einer durch das Mitverstellen des an der Fahrerbremskraftübertragungskomponente angeordneten Magneten bewirkten Relativbewegung zwischen dem Magneten und dem elektrischen Leiter eine Induktionsspannung in dem mindestens einen elektrischen Leiter induziert wird.

Des Weiteren wird in einem Verfahrensschritt S3 die induzierte Induktionsspannung oder ein unter Berücksichtigung der Induktionsspannung erzeugtes Wecksignal so an die mindestens eines Bremssystemkomponente des Bremssystems ausgegeben, dass die mindestens eine Bremssystemkomponente mittels der Induktionsspannung oder des Wecksignals aus einem ersten Energieverbrauch-Modus in einen von dem ersten Energieverbrauch-Modus abweichenden zweiten Energieverbrauch-Modus gesteuert wird. Beispielsweise kann der Induktionsstrom oder das Wecksignal an einen Prozessor oder einen Schaltkreis der mindestens einen Bremssystemkomponente bereitgestellt werden. Zum Erzeugen des Wecksignals kann auch die Induktionsspannung in das Wecksignal umgewandelt werden.

Das oben beschriebene vorteilhafte Verfahren ermöglicht die Verwendung eines Magneten eines Elektromotors oder eines Sensors für die Weckvorrichtung. Beispielsweise kann als Magnet ein Permanentmagnet eines Elektromotors einer Bremskraftverstärkervorrichtung und/oder ein Permanentmagnet eines Rotor-Lagesensors der Bremskraftverstärkervorrichtung verwendet werden.

## Patentansprüche

1. Weckvorrichtung (10, 48) für eine Bremssystemkomponente (28) eines Fahrzeugs mit:
einem an einer verstellbaren Fahrerbremskraftübertragungskomponente (12) eines Bremssystems mitverstellbar anordbaren Magneten (14, 50);
einem elektrischen Leiter (16, 56), in welchem bei einer durch ein Mitverstellen des an der Fahrerbremskraftübertragungskomponente (12) angeordneten Magneten (14, 50) bewirkten Relativbewegung zwischen dem Magneten (14, 50) und dem elektrischen Leiter (16, 56) eine Induktionsspannung induzierbar ist; und
einer Ausgabeeinrichtung (18, 58), mittels welcher die induzierte Induktionsspannung oder ein unter Berücksichtigung der Induktionsspannung erzeugtes Wecksignal an die mindestens eine Bremssystemkomponente (28) so ausgebbar ist, dass die mindestens eine Bremssystemkomponente (28) mittels der Induktionsspannung oder des Wecksignals aus einem ersten Energieverbrauch-Modus in einen von dem ersten Energieverbrauch-Modus abweichenden zweiten Energieverbrauch-Modus steuerbar ist;
**dadurch gekennzeichnet, dass**
der Magnet (14, 50) mittels einer Getriebeeinrichtung (20) derart an der verstellbaren Fahrerbremskraftübertragungskomponente (12) mitverstellbar anordbar ist, dass der Magnet (14, 50) durch das Mitverstellen in eine Rotationsbewegung (22, 52) versetzbar ist.

2. Weckvorrichtung (10, 48) nach Anspruch 1, wobei die mindestens eine Bremssystemkomponente (28) mittels der Induktionsspannung oder des Wecksignals aus dem ersten Energieverbrauch-Modus mit einem ersten Energieverbrauch in den zweiten Energieverbrauch-Modus mit einem gegenüber dem ersten Energieverbrauch gesteigerten zweiten Energieverbrauch steuerbar ist.

3. Weckvorrichtung (10, 48) nach Anspruch 2, wobei die mindestens eine Bremssystemkomponente (28) mittels der Induktionsspannung oder des Wecksignals aus einem deaktivierten Modus als dem ersten Energieverbrauch-Modus in einen aktivierten Modus als den zweiten Energieverbrauch-Modus steuerbar ist.

4. Weckvorrichtung (10, 48) nach einem der vorhergehenden Ansprüche, wobei der Magnet (14, 50) ein Permanentmagnet (14) eines Elektromotors (26) einer Bremskraftverstärkervorrichtung (28) und/oder ein Permanentmagnet (50) eines Rotor-Lagesensors (54) ist.

5. Weckvorrichtung (10, 48) nach einem der vorhergehenden Ansprüche, wobei der Magnet (14, 50) mittels der Getriebeeinrichtung (20) an einer Eingangsstange, über welche eine auf ein Bremsbetätigungselement (30) ausgeübte Fahrerbremskraft auf mindestens einen verstellbaren Kolben eines Hauptbremszylinders (32) übertragbar ist, als der verstellbaren Fahrerbremskraftübertragungskomponente (12) mitverstellbar anordbar ist.

6. Weckvorrichtung (10, 48) nach einem der vorhergehenden Ansprüche, wobei mittels der Induktionsspannung oder des Wecksignals die Bremskraftverstärkervorrichtung (28), eine ABS-Vorrichtung, eine ESP-Vorrichtung, eine Plungervorrichtung, eine elektrische Servolenkung, ein CAN-Netzwerk und/oder ein Boost-Netzwerk als die mindestens eine Bremssystemkomponente aus dem ersten Energieverbrauch-Modus in den zweiten Energieverbrauch-Modus steuerbar sind.

7. Weckvorrichtung (10, 48) nach einem der vorhergehenden Ansprüche, wobei der elektrische Leiter (16) mindestens eine Ansteuerleitung (16) der Bremskraftverstärkervorrichtung (28) umfasst.

8. Weckvorrichtung (10, 48) nach einem der Ansprüche 1 bis 6, wobei der elektrische Leiter (56) mindestens eine ortsfeste Spule (56) des Rotor-Lagesensors (54) umfasst.

9. Bremskraftverstärkervorrichtung (28) für ein Bremssystem eines Fahrzeugs mit:
einer Weckvorrichtung (10, 48) nach einem der vorhergehenden Ansprüche.

10. Bremsgerät für ein Bremssystem eines Fahrzeugs mit:
einer Weckvorrichtung (10, 48) nach einem der Ansprüche 1 bis 8; und
einer verstellbaren Fahrerbremskraftübertragungskomponente (12), an welcher der Magnet (14, 50) der Weckvorrichtung (10, 48) mittels der Getriebeeinrichtung (20) derart mitverstellbar angeordnet ist, dass der Magnet (14, 50) durch das Mitverstellen mit der verstellbaren Fahrerbremskraftübertragungskomponente (12) in eine Rotationsbewegung (22, 52) versetzbar ist.

11. Bremssystem für ein Fahrzeug mit einer Weckvorrichtung (10, 48) nach einem der Ansprüche 1 bis 8, einer Bremskraftverstärkervorrichtung (28) nach Anspruch 9 oder einem Bremsgerät nach Anspruch 10.

12. Verfahren zum Wecken mindestens einer Bremssystemkomponente (28) eines Fahrzeugs mit den Schritten:
Bereitstellen eines an einer verstellbaren Fahrerbremskraftübertragungskomponente (12) mitverstellbar angeordneten Magneten (14, 50);
Bereitstellen eines elektrischen Leiters (16, 56), im welchen bei einer durch ein Mitverstellen des an der Fahrerbremskraftübertragungskomponente (12) angeordneten Magneten (14, 50) bewirkten Relativbewegung zwischen dem Magneten (14, 50) und dem elektrischen Leiter (16, 56) eine Induktionsspannung induziert wird (S2); und
Ausgeben der Induktionsspannung oder eines unter Berücksichtigung der Induktionsspannung erzeugten Wecksignals so an die mindestens eine Bremssystemkomponente (28), dass die mindestens eine Bremssystemkomponente (28) mittels der Induktionsspannung oder des Wecksignals aus einem ersten Energieverbrauch-Modus in einen von dem ersten Energieverbrauch-Modus abweichenden zweiten Energieverbrauch-Modus gesteuert wird (S3);
**gekennzeichnet durch** den Schritt:
Mitverstellbares Anordnen des Magneten (14, 50) mittels einer Getriebeeinrichtung (20) derart an der verstellbaren Fahrerbremskraftübertragungskomponente (12), dass der Magnet (14, 50) **durch** das Mitverstellen in eine Rotationsbewegung (22, 52) versetzt wird, beim Bereitstellen des Magneten (14, 50) (S1).

13. Verfahren nach Anspruch 12, wobei als Magnet (14, 50) ein Permanentmagnet (14) eines Elektromotors (26) einer Bremskraftverstärkervorrichtung (28) und/oder ein Permanentmagnet (50) eines Rotor-Lagesensors (54) verwendet wird.

## Claims

1. Wake-up apparatus (10, 48) for a brake system component (28) of a vehicle, comprising:
a magnet (14, 50) which can be arranged, such that it can be jointly adjusted, on an adjustable driver braking force transmission component (12) of a brake system;
an electrical conductor (16, 56) in which an induction voltage can be induced during a relative movement between the magnet (14, 50) and the electrical conductor (16, 56), said relative movement being effected by joint adjustment of the magnet (14, 50) which is arranged on the driver braking force transmission component (12); and
an output device (18, 58) by means of which the induced induction voltage or a wake-up signal which is generated taking into account the induction voltage can be output to the at least one brake system component (28) such that the at least one brake system component (28) can be moved from a first energy consumption mode to a second energy consumption mode, which differs from the first energy consumption mode, by means of the induction voltage or the wake-up signal;
**characterized in that**
the magnet (14, 50) can be arranged, such that it can be jointly adjusted, on the adjustable driver braking force transmission component (12) by means of a gear mechanism device (20) in such a way that the magnet (14, 50) can be made to perform a rotation movement (22, 52) by the joint adjustment.

2. Wake-up apparatus (10, 48) according to Claim 1, wherein the at least one brake system component (28) can be moved from the first energy consumption mode with a first energy consumption level to the second energy consumption mode with a second energy consumption level, which is increased in relation to the first energy consumption level, by means of the induction voltage or the wake-up signal.

3. Wake-up apparatus (10, 48) according to Claim 2, wherein the at least one brake system component (28) can be moved from a deactivated mode as the first energy consumption mode to an activated mode as the second energy consumption mode by means of the induction voltage or the wake-up signal.

4. Wake-up apparatus (10, 48) according to one of the preceding claims, wherein the magnet (14, 50) is a permanent magnet (14) of an electric motor (26) of a braking force amplifier apparatus (28) and/or a permanent magnet (50) of a rotor position sensor (54).

5. Wake-up apparatus (10, 48) according to one of the preceding claims, wherein the magnet (14, 50) can be arranged, such that it can be jointly adjusted, on an input rod, by means of which a driver braking force which is exerted on a brake operating element (30) can be transmitted to at least one adjustable piston of a main brake cylinder (32), as the adjustable driver braking force transmission component (12) by means of the gear mechanism device (20).

6. Wake-up apparatus (10, 48) according to one of the preceding claims, wherein the braking force amplifier apparatus (28), an ABS apparatus, an ESP apparatus, a plunger apparatus, an electrical power steering system, a CAN network and/or a booster network as the at least one brake system component can be moved from the first energy consumption mode to the second energy consumption mode by means of the induction voltage or the wake-up signal.

7. Wake-up apparatus (10, 48) according to one of the preceding claims, wherein the electrical conductor (16) comprises at least one drive line (16) of the braking force amplifier apparatus (28).

8. Wake-up apparatus (10, 48) according to one of Claims 1 to 6, wherein the electrical conductor (56) comprises at least one stationary coil (56) of the rotor position sensor (54).

9. Braking force amplifier apparatus (28) for a brake system of a vehicle, comprising:
a wake-up apparatus (10, 48) according to one of the preceding claims.

10. Brake device for a brake system of a vehicle, comprising:
a wake-up apparatus (10, 48) according to one of Claims 1 to 8; and
an adjustable driver braking force transmission component (12) on which the magnet (14, 50) of the wake-up apparatus (10, 48) is arranged, such that it can be jointly adjusted, by means of the gear mechanism device (20) in such a way that the magnet (14, 50) can be made to perform a rotation movement (22, 52) by the joint adjustment with the adjustable driver braking force transmission component (12).

11. Brake system for a vehicle comprising a wake-up apparatus (10, 48) according to one of Claims 1 to 8, a braking force amplifier apparatus (28) according to Claim 9, or a brake device according to Claim 10.

12. Method for waking up at least one brake system component (28) of a vehicle, comprising the steps of:
providing a magnet (14, 50) which is arranged, such that it can be jointly adjusted, on an adjustable driver braking force transmission component (12);
providing an electrical conductor (16, 56) in which an induction voltage is induced during a relative movement between the magnet (14, 50) and the electrical conductor (16, 56), said relative movement being effected by joint adjustment of the magnet (14, 50) which is arranged on the driver braking force transmission component (12) (S2); and
outputting the induction voltage or a wake-up signal which is generated taking into account the induction voltage to the at least one brake system component (28) such that the at least one brake system component (28) is moved from a first energy consumption mode to a second energy consumption mode, which differs from the first energy consumption mode, by means of the induction voltage or the wake-up signal (S3);
**characterized by** the step of:
arranging the magnet (14, 50), such that it can be jointly adjusted, on the adjustable driver braking force transmission component (12) by means of a gear mechanism device (20) in such a way that the magnet (14, 50) can be made to perform a rotation movement (22, 52) by the joint adjustment when the magnet (14, 50) is provided (S1).

13. Method according to Claim 12, wherein the magnet (14, 50) used is a permanent magnet (14) of an electric motor (26) of a braking force amplifier apparatus (28) and/or a permanent magnet (50) of a rotor position sensor (54).

## Revendications

1. Ensemble d'activation (10, 48) pour composant (28) de système de frein d'un véhicule, l'ensemble présentant :
un aimant (14, 50) qui peut être placé à ajustement conjoint sur un composant (12) de transfert de force de freinage par le conducteur d'un système de freinage,
un conducteur électrique (16, 56) dans lequel une tension peut être induite par induction lors d'un déplacement relatif entre l'aimant (14, 50) et le conducteur électrique (16, 56) résultant d'un ajustement conjoint de l'aimant (14, 50) disposé sur le composant (12) de transfert de la force de frein appliquée par le conducteur de la force de frein et
un dispositif d'émission (18, 58) au moyen duquel la tension d'induction induite ou un signal d'activation formé en tenant compte de la tension d'induction peut être délivrée à au moins un composant (28) du système de frein de telle sorte que le ou les composants (28) du système de frein puissent être amenés au moyen de la tension d'induction ou du signal d'activation depuis un premier mode de consommation d'énergie à un deuxième mode de consommation d'énergie différent du premier mode de consommation d'énergie, **caractérisé en ce que**
l'aimant (14, 50) peut être placé à ajustement conjoint sur le composant (12) ajustable de transfert de la force de frein appliquée par le conducteur au moyen d'un dispositif de transmission (20), de telle sorte que l'aimant (14, 50) puisse être amené à se déplacer en rotation (22, 52) par l'ajustement conjoint.

2. Ensemble d'activation (10, 48) selon la revendication 1, dans lequel le ou les composants (28) du système de frein peuvent être amenés au moyen de la tension d'induction ou du signal d'activation depuis le premier mode de consommation en énergie à une première consommation en énergie jusque dans le deuxième mode de consommation en énergie à une deuxième consommation d'énergie plus élevée que la première consommation en énergie.

3. Ensemble d'activation (10, 48) selon la revendication 2, dans lequel le ou les composants (28) du système de frein peuvent être amenés au moyen de la tension d'induction ou du signal d'activation depuis un mode désactivé comme premier mode de consommation en énergie jusque dans un mode activé comme deuxième mode de consommation en énergie.

4. Ensemble d'activation (10, 48) selon l'une des revendications précédentes, dans lequel l'aimant (14, 50) est un aimant permanent (14) d'un moteur électrique (26) d'un ensemble (28) d'amplification de force de freinage et/ou un aimant permanent (50) d'un capteur (54) de position d'un rotor.

5. Ensemble d'activation (10, 48) selon l'une des revendications précédentes, dans lequel l'aimant (14, 50) peut être disposé à ajustement conjoint au moyen du dispositif de transmission (20) sur une tringle d'entrée par laquelle une force de freinage exercée par le conducteur sur un élément (30) d'actionnement de frein peut être transférée à au moins un piston ajustable d'un cylindre principal de frein (32) apte à être disposé à ajustement conjoint comme composant (12) ajustable de transfert de la force de frein appliquée par le conducteur.

6. Ensemble d'activation (10, 48) selon l'une des revendications précédentes, dans lequel au moyen de la tension d'induction ou du signal d'activation, l'ensemble (28) d'amplification de la force de freinage, un ensemble ABS, un ensemble ESP, un ensemble de plongeur, une servodirection électrique, un réseau CAN et/ou un réseau de suralimentation peuvent être amenés comme composant ou composants du système de frein depuis le premier mode de consommation en énergie jusque dans le deuxième mode de consommation en énergie.

7. Ensemble d'activation (10, 48) selon l'une des revendications précédentes, dans lequel le conducteur électrique (16) comporte au moins un conducteur de commande (16) de l'ensemble (28) d'amplification de la force de freinage.

8. Ensemble d'activation (10, 48) selon l'une des revendications 1 à 6, dans lequel le conducteur électrique (56) comporte au moins une bobine fixe (56) du capteur (54) de position du rotor.

9. Ensemble (28) d'amplification de la force de freinage pour système de frein de véhicule, présentant un ensemble d'activation (10, 48) selon l'une des revendications précédentes.

10. Appareil de frein pour système de frein d'un véhicule, présentant :
un ensemble d'activation (10, 48) selon l'une des revendications 1 à 8 et
un composant ajustable (12) de transfert de la force de frein par le conducteur, sur lequel l'aimant (14, 50) du dispositif d'activation (10, 48) est disposé à déplacement conjoint au moyen du dispositif de transmission (20) de telle sorte que l'aimant (14, 50) puisse être amené dans un déplacement de rotation (22, 52) ajustable (12) de transfert de la force de frein appliquée par le conducteur.

11. Système de frein pour véhicule, doté d'un ensemble d'activation (10, 48) selon l'une des revendications 1 à 8, d'un ensemble (28) d'amplification de la force de freinage selon la revendication 9 ou d'un appareil de frein selon la revendication 10.

12. Procédé d'activation d'au moins un composant (28) d'un système de frein d'un véhicule, le procédé comportant les étapes qui consistent à :
prévoir un aimant (14, 50) disposé à ajustement conjoint sur un composant ajustable (12) de transfert de la force de frein appliquée par le conducteur,
prévoir un conducteur électrique (16, 56) dans lequel une tension d'induction est induite (S2) lors d'un déplacement relatif entre l'aimant (14, 50) et le conducteur électrique (16, 56) résultant de l'ajustement conjoint de l'aimant (14, 50) disposé sur le composant (12) de transfert de la force de freinage appliquée par le conducteur et
envoyer la tension d'induction ou un signal d'activation formé en tenant compte de la tension d'induction au composant ou aux composants (28) du système de frein de telle sorte que le ou les composants (28) du système de frein soient amenés au moyen de la tension d'induction ou du signal d'activation depuis un premier mode de consommation en énergie jusque dans un deuxième mode de consommation en énergie différent du premier mode de consommation en énergie (S3),
**caractérisé par** l'étape qui consiste à :
disposer l'aimant (14, 50) à ajustement conjoint au moyen d'un dispositif de transmission (20) sur le composant ajustable (12) de transfert de la force de freinage exercée par le conducteur de telle sorte que l'aimant (14, 50) soit amené par l'ajustement conjoint à se déplacer en rotation (22, 52) lorsque l'aimant (14, 50) est prévu (S1).

13. Procédé selon la revendication 12, dans lequel l'aimant (14, 50) utilisé est un aimant permanent (14) d'un moteur électrique (26) d'un ensemble (28) d'amplification de la force de freinage et/ou un aimant permanent (50) d'un capteur (54) de position de rotor.
